# EUROPEAN PATENT SPECIFICATION

(11) **EP 3 757 744 B1**
(45) Date of publication and mention of the grant of the patent: **25.05.2022**
(21) Application number: 18911490.3
(22) Date of filing: 26.03.2018
(51) Int. Cl.: G06F 3/0488, H04N 5/232

(54) **DISPLAY CONTROL METHOD AND TERMINAL**
ANZEIGESTEUERUNGSVERFAHREN UND -ENDGERÄT
PROCÉDÉ DE COMMANDE D'AFFICHAGE ET TERMINAL

(43) Date of publication of application: 30.12.2020
(73) Proprietor: HUAWEI TECHNOLOGIES CO., LTD., Shenzhen, Guangdong 518129 (CN)
(72) Inventor: YU, Yan, Shenzhen, Guangdong 518129 (CN); SONG, Lang, Shenzhen, Guangdong 518129 (CN); DONG, Feng, Shenzhen, Guangdong 518129 (CN); YANG, Jun, Shenzhen, Guangdong 518129 (CN)
(74) Representative: MERH-IP Matias Erny Reichl Hoffmann Patentanwälte PartG mbB
(86) International application number: PCT/CN2018/080567
(87) International publication number: WO 2019/183780

(56) References cited:
- CN-A- 101 404 687
- CN-A- 104 301 610
- CN-A- 105 630 329
- CN-A- 106 020 628
- CN-A- 107 024 990
- US-A1- 2016 165 133
- US-A1- 2016 366 332

## Description

### TECHNICAL FIELD

This application relates to the field of industrial design, and in particular, to a display control method and a terminal.

### BACKGROUND

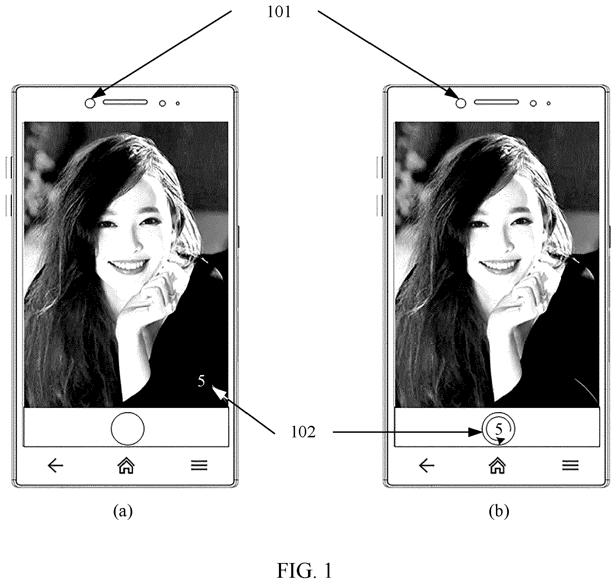

Currently, when countdown photographing is performed by using a front-facing camera of a mobile phone, a countdown needs to be displayed on the mobile phone to prompt a user. As shown in (a) in FIG. 1, a countdown 102 may be displayed on an image photographed by a front-facing camera 101 in real time, or as shown in (b) in FIG. 1, the countdown 102 is displayed on a photographing button. Because the countdown is displayed in the foregoing manner, a line of sight of the user unconsciously moves downward. However, the mobile phone camera 101 is usually installed in an upper part of the mobile phone. Consequently, during photographing, especially during selfie photographing, eyes of the user are half-closed, and this affects a photographing effect.

Patent application US 2016/165133 A1 relates to camera devices having a display, and more particularly, to devices including a front camera for shooting in a self-portrait mode, and methods for controlling such devices.

### SUMMARY

The invention is defined by the appended claims.

Embodiments of this application provide a display control method and a terminal, to guide a line of sight of a user to a front-facing camera.

To achieve the foregoing objective, the following technical solutions are used in the embodiments of this application.

According to a first aspect, a display control method is provided. The display control method is applied to a terminal including a display screen and a front-facing camera. The method includes: starting, by the terminal, the front-facing camera, and displaying a preview screen on the display screen, where content on the preview screen is an image collected by the camera; in response to a time-lapse photographing command, sequentially displaying, by the terminal, at least two countdown numbers at a position that is preset on the display screen and that is close to the front-facing camera, where each countdown number is sequentially displayed from a start position to an end position, the start position is close to the front-facing camera, and the end position, relative to the start position, is far away from the front-facing camera; and automatically starting, by the terminal, a shutter when a countdown ends, and displaying, on the display screen, a photographed image when the shutter is started this time. According to the display control method provided in this embodiment of this application, the countdown number moves from a position close to the front-facing camera to a position far away from the front-facing camera, to guide a line of sight of a user to the front-facing camera or close to a direction of the front-facing camera.

In a possible implementation, the method further includes: displaying, by the terminal, a graph that moves along with the countdown number, where the countdown number is displayed in the graph. This implementation makes countdown display more distinct.

In a possible implementation, when a first preset condition is not met, an upper part of the graph deforms toward an upper frame of the terminal to connect to the upper frame. This implementation makes graph display more abundant.

In a possible implementation, that the first preset condition is not met includes: the countdown number is less than a first time threshold, or a moving distance of the graph is less than a first distance threshold, or a distance between an upper edge or a lower edge of the graph and the upper frame is less than a second distance threshold. This implementation provides a specific case in which the first preset condition is not met.

In a possible implementation, the graph is a vector graph in a water droplet shape. This implementation provides a specific implementation of the graph.

According to a second aspect, a terminal is provided. The terminal includes a display screen and a front-facing camera. The terminal further includes: a photographing unit, configured to start the front-facing camera; and a display unit, configured to display a preview screen on the display screen, where content on the preview screen is an image collected by the camera. The display unit is further configured to: in response to a time-lapse photographing command, sequentially display at least two countdown numbers at a position that is preset on the display screen and that is close to the front-facing camera, where each countdown number is sequentially displayed from a start position to an end position, the start position is close to the front-facing camera, and the end position, relative to the start position, is far away from the front-facing camera; the photographing unit is further configured to automatically start a shutter when a countdown ends; and the display unit is further configured to display, on the display screen, a photographed image when the shutter is started this time. Based on a same inventive concept, for a problem-resolving principle and beneficial effects of the terminal, refer to the first aspect, the possible method implementations of the first aspect, and brought beneficial effects. Therefore, for implementation of the terminal, refer to the first aspect and the possible method implementations of the first aspect. Details are not repeated.

According to a third aspect not being part of the invention, a display control method is provided. The method is applied to a terminal including a display screen and a touchscreen, and the method includes: displaying, by the terminal, a desktop on the display screen; if the terminal detects, on the touchscreen, that a preset touch operation meets a first preset condition, dynamically displaying, by the terminal, a part of a search box control from a first preset position to a second preset position on the display screen, where a shape and/or transparency of the part of the search box control change/changes with a moving distance of the touch operation, the first preset condition is that the touch operation continuously moves in a preset direction at a speed less than a speed threshold, and the first preset position is different from the second preset position; and if the terminal detects that the touch operation meets a second preset condition, displaying, by the terminal, a complete search box control at the second preset position, where the second preset condition is that a moving distance of the touch operation in the preset direction meets a preset threshold, or the second preset condition is that the touch operation reaches a preset position or falls within a preset position range. According to the display control method provided in this embodiment of this application, when the desktop is displayed, the terminal detects the touch operation that is of a user and that continuously moves in the preset direction, to display a dynamically changing search box. When the touch operation meets a preset condition, a complete search box is displayed. The search box can be quickly displayed through a moving touch operation of the user.

In a possible implementation, the method further includes: if the terminal detects that the touch operation meets a third preset condition, dynamically displaying, by the terminal, the part of the search box control from the first preset position to the second preset position according to a preset time sequence, and displaying, the complete search box control at the second preset position, where the third preset condition is that the touch operation continuously moves in the preset direction at a speed greater than the speed threshold. This implementation provides a complete process in which the search box control is triggered to be displayed by a quick-moving touch operation.

In a possible implementation, the method further includes: if the terminal detects that the touch operation does not meet the second preset condition when the touch operation ends, or if the terminal detects that the touch operation continuously moves in a direction opposite to the preset direction, dynamically displaying, by the terminal, the part of the search box control from a current display position of the search box control to the first preset position. This implementation provides a specific implementation of rolling back or hiding the search box control.

According to a fourth aspect not being part of the invention, a terminal is provided. The terminal includes a display screen and a touchscreen, and the terminal further includes a display unit and a detection unit. The display unit is configured to display a desktop on the display screen; the display unit is further configured to: if the detection unit detects, on the touchscreen, that a preset touch operation meets a first preset condition, dynamically display a part of a search box control from a first preset position to a second preset position on the display screen, where a shape and/or transparency of the part of the search box control change/changes with a moving distance of the touch operation, the first preset condition is that the touch operation continuously moves in a preset direction at a speed less than a speed threshold, and the first preset position is different from the second preset position; and the display unit is further configured to: if the detection unit detects that the touch operation meets a second preset condition, display a complete search box control at the second preset position, where the second preset condition is that a moving distance of the touch operation in the preset direction meets a preset threshold, or the second preset condition is that the touch operation reaches a preset position or falls within a preset position range. Based on a same inventive concept, for a problem-resolving principle and beneficial effects of the terminal, refer to the third aspect, the possible method implementations of the third aspect, and the brought beneficial effects. Therefore, for implementation of the terminal, refer to the third aspect and the possible method implementations of the third aspect. Details are not repeated.

According to a fifth aspect, an embodiment of this application provides a terminal, including a processor, a memory, and a communications interface. The memory is configured to store a computer-executable instruction. The processor is coupled to the memory. When the terminal runs, the processor executes the computer-executable instruction stored in the memory, so that the terminal performs the method according to the first aspect and the possible implementations of the first aspect.

According to a sixth aspect, an embodiment of this application provides a computer-readable storage medium. The computer-readable storage medium stores an instruction. When the instruction is run on any one of the foregoing terminals, the terminal is enabled to perform the methods according to the first aspect and the possible implementations of the first aspect.

According to a seventh aspect, an embodiment of this application provides a computer program product including an instruction. When the computer program product runs on any one of the foregoing terminals, the terminal is enabled to perform the method according to the first aspect and the possible implementations of the first aspect.

In the embodiments of this application, names of components of the terminal do not constitute any limitation on the device. In an actual implementation, these components may have other names. Provided that functions of the components are similar to those in the embodiments of this application, the components fall within the scope of the claims of this application.

In addition, for technical effects brought by any design manner in the fifth to the seventh aspects, refer to technical effects brought by different design methods in the first aspect. Details are not described herein again.

### BRIEF DESCRIPTION OF DRAWINGS

FIG. 1 is a schematic diagram of providing a countdown according to an embodiment of this application;
FIG. 2 is a schematic diagram of a front view of a terminal according to an embodiment of this application;
FIG. 3 is a schematic structural diagram 1 of a terminal according to an embodiment of this application;
FIG. 4 is a schematic flowchart 1 of a display control method according to an embodiment of this application;
FIG. 5 is a schematic diagram 1 of a graph according to an embodiment of this application;
FIG. 6 is a schematic diagram 2 of a graph according to an embodiment of this application;
FIG. 7 is a schematic diagram in which a graph changes along with a countdown according to an embodiment of this application;
FIG. 8 is a schematic diagram in which a graph of a next second is displayed but a graph of a previous second does not disappear according to an embodiment of this application;
FIG. 9 is a schematic diagram of a principle of drawing a graph according to an embodiment of this application;
FIG. 10 is a schematic diagram of a principle of a Bezier curve according to an embodiment of this application;
FIG. 11 is a schematic diagram of a time sequence according to which a graph changes according to an embodiment of this application;
FIG. 12 is a schematic diagram of an acceleration curve simulated by using a third-order Bezier curve according to an embodiment of this application;
FIG. 13 is a schematic diagram of a deformation curve simulated by using a third-order Bezier curve according to an embodiment of this application;
FIG. 14 is a schematic flowchart 2 of a display control method according to an example not being part of the invention;
FIG. 15 is a schematic diagram 1 in which a search box moves along with a moving direction of a touch point according to an example not being part of the invention;
FIG. 16 is a schematic diagram of a principle of drawing a search box according to an example not being part of the invention;
FIG. 17 is a schematic flowchart 3 of a display control method according to an example not being part of the invention;
FIG. 18 is a schematic diagram of a time sequence according to which a search box changes according to an example not being part of the invention;
FIG. 19 is a schematic diagram of a final change result of a search box according to an example not being part of the invention;
FIG. 20 is a schematic flowchart 4 of a display control method according to an example not being part of the invention;
FIG. 21 is a schematic diagram 2 in which a search box moves along with a moving direction of a touch point according to an example not being part of the invention;
FIG. 22 is a schematic structural diagram 2 of a terminal according to an example not being part of the invention; and
FIG. 23 is a schematic structural diagram 3 of a terminal according to an example not being part of the invention;

### DESCRIPTION OF EMBODIMENTS

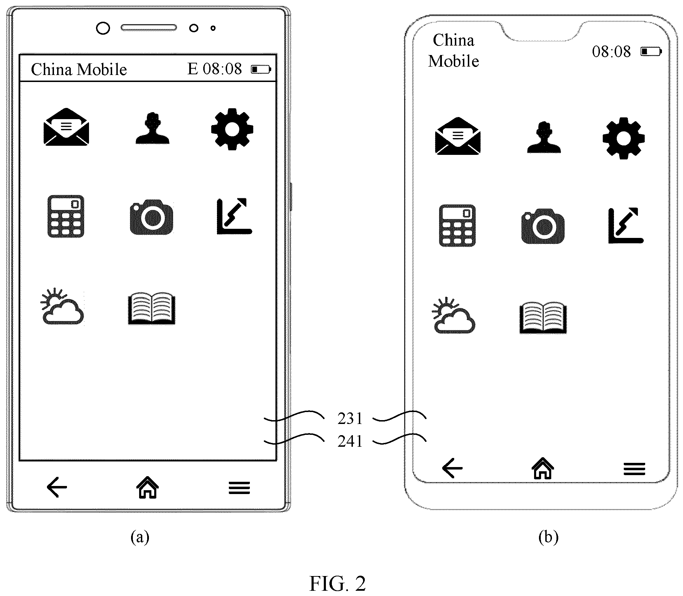

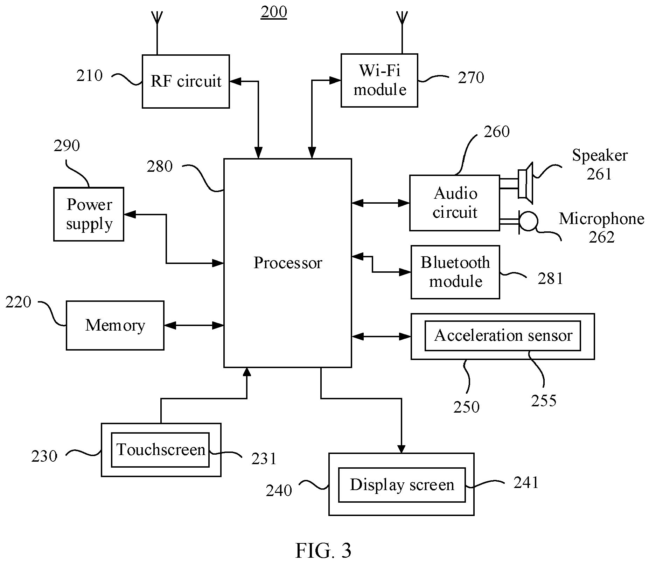

The terminal in the embodiments of this application may be various electronic devices provided with a display screen, for example, may be a wearable electronic device (for example, a smartwatch), a tablet computer, a desktop computer, a virtual reality apparatus, or an augmented reality apparatus, or may be a mobile phone 200 shown in FIG. 2 or FIG. 3. A specific form of the terminal is not limited in the embodiments of this application.

In the following embodiment, how the terminal implements a specific technical solution in the embodiment is described by using a mobile phone as an example. As shown in FIG. 2 or FIG. 3, the terminal in this embodiment of this application may be the mobile phone 200. FIG. 2 is a schematic front view of the mobile phone 200. The mobile phone 200 may have, for example, a full screen shown in (a) in FIG. 2, or a full screen with a notch (notch) shown in (b) in FIG. 2 (or referred to an irregular full screen). It may be understood that another name may be used. That a screen is collectively referred to as the full screen with a notch in this specification is not intended to limit a specific name of the screen in actual application. It should be noted that, for the full screen with a notch, the notch may be located at a central position or a non-central position of the screen shown in the figure. This is not limited in this application. FIG. 3 is a schematic structural diagram of hardware of the mobile phone 200. It should be understood that the mobile phone 200 shown in the figure is merely an example of the terminal, and the mobile phone 200 may have more or fewer components than those shown in the figure, and may have a combination of two or more components or have different components.

As shown in FIG. 3, the mobile phone 200 may include components such as a radio frequency (Radio Frequency, RF) circuit 210, a memory 220, an input unit 230, a display unit 240, a sensor 250, an audio circuit 260, a wireless fidelity (Wireless Fidelity, Wi-Fi) module 270, a processor 280, a Bluetooth module 281, and a power supply 290.

The RF circuit 210 may be configured to receive and send a signal during information receiving and sending or during a call. The RF circuit 210 may receive downlink data from a base station and then deliver the downlink data to the processor 280 for processing, and may send uplink data to the base station. Usually, the RF circuit includes but is not limited to components such as an antenna, at least one amplifier, a transceiver, a coupler, a low noise amplifier, and a duplexer.

The memory 220 may be configured to store a software program and data. The processor 280 runs the software program or the data stored in the memory 220, to perform various functions of the mobile phone 200 and process data. The memory 220 may include a high-speed random access memory, or may include a nonvolatile memory such as at least one magnetic disk storage device, a flash memory device, or another volatile solid-state storage device. The memory 220 stores an operating system that supports running of the mobile phone 200, for example, an iOS^{®} operating system developed by Apple, an Android^{®} open-source operating system developed by Google, and a Windows^{®} operating system developed by Microsoft. The memory 220 in this application may store the operating system and various application software, and may further store code for performing the method in the embodiments of this application.

The input unit 230 (for example, a touchscreen) may be configured to receive entered digital or character information, and generate signal input related to user setting and function control of the mobile phone 200. Specifically, the input unit 230 may include the touchscreen 231 disposed on a front surface of the mobile phone 200 shown in FIG. 2, and may collect a touch operation of a user on or near the touchscreen 231. The input unit 230 in this application may collect the touch operation of the user.

The display unit 240 (namely, a display screen) may be configured to display information entered by the user or information provided to the user and a graphical user interface (Graphical User Interface, GUI) with various menus of the mobile phone 200. The display unit 240 may include a display screen 241 disposed on the front surface of the mobile phone 200. The display screen 241 may be configured in a form of a liquid crystal display, a light emitting diode, or the like. The display unit 240 may be configured to display various graphical user interfaces described in this application. The touchscreen 231 may cover the display screen 241, or the touchscreen 231 may be integrated with the display screen 241 to implement input and output functions of the mobile phone 200. After integration, the touchscreen 231 and the display screen 241 may be briefly referred to as a touch display screen. The display unit 240 in this application may display a special animation effect.

The mobile phone 200 may further include at least one sensor 250, such as an optic sensor or a motion sensor. The mobile phone 200 may be further provided with another sensor, such as a gyroscope, a barometer, a hygrometer, a thermometer, and an infrared sensor.

The audio circuit 260, a speaker 261, and a microphone 262 may provide an audio interface between the user and the mobile phone 200. The audio circuit 260 may convert received audio data into an electrical signal and transmit the electrical signal to the speaker 261. The speaker 261 converts the electrical signal into a sound signal for output. In addition, the microphone 262 converts a collected sound signal into an electrical signal. The audio circuit 260 receives the electrical signal, converts the electrical signal into audio data, and outputs the audio data to the RF circuit 210 to send the audio data to, for example, another mobile phone, or outputs the audio data to the memory 220 for further processing.

Wi-Fi is a short-distance radio transmission technology. The mobile phone 200 may help, by using the Wi-Fi module 270, the user to receive and send an email, browse a web page, access streaming media, and the like. The Wi-Fi module 270 provides wireless broadband internet access for the user.

The processor 280 is a control center of the mobile phone 200, and is connected to various parts of the entire mobile phone by using various interfaces and lines. The processor 280 performs the various functions of the mobile phone 200 and processes the data by running or executing the software program stored in the memory 220 and invoking the data stored in the memory 220. In some embodiments, the processor 280 may include one or more processing units. An application processor and a baseband processor may be further integrated into the processor 280. The application processor mainly processes the operating system, a user interface, an application program, and the like. The baseband processor mainly processes wireless communication. It may be understood that the baseband processor may alternatively not be integrated into the processor 280. The processor 280 in this application may execute the operating system and the application program, and perform user interface display, a touch response, and the method in the embodiments of this application.

The Bluetooth module 281 is configured to exchange information, by using a Bluetooth protocol, with another Bluetooth device having a Bluetooth module. For example, the mobile phone 200 may establish, by using the Bluetooth module 281, a Bluetooth connection to a wearable electronic device (for example, a smartwatch) that also has a Bluetooth module, to exchange data.

The mobile phone 200 further includes the power supply 290 (for example, a battery) that supplies power to the components. The power supply may be logically connected to the processor 280 by using a power management system, to implement functions such as charging, discharging, and power consumption management by using the power management system.

All methods in the following embodiments may be implemented on the mobile phone 200 having the foregoing hardware structure. It should be noted that although the following accompanying drawings focus on description by using the full screen with a notch shown in (b) in FIG. 2 as an example, it may be understood that the method in the following embodiment is also applicable to the common full screen shown in (a) in FIG. 2. The following accompanying drawings for depicting a display interface are merely used as an example to depict a possible representation form of the display interface, and are not intended to limit that an actual product needs to use a same representation form.

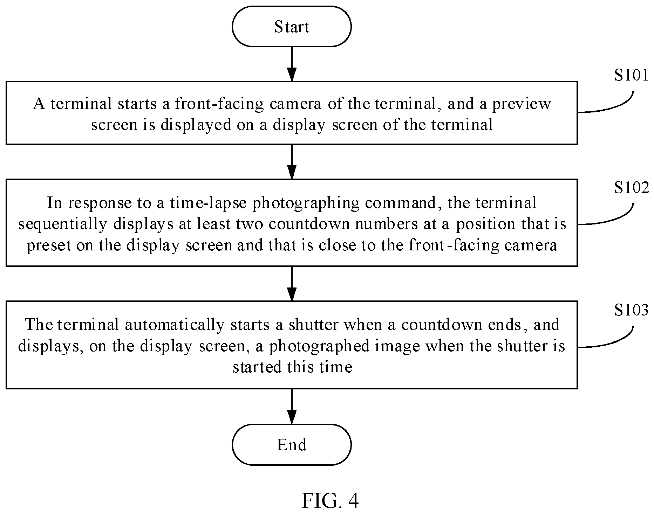

In an application program such as Camera or WeChat, if a front-facing camera of a terminal is started, an image collected by the camera may be displayed in real time on a display screen of the terminal. After a user selects a time-lapse photographing function or the application program automatically enters a time-lapse photographing mode, the display screen of the terminal starts to display a countdown. After the countdown ends, the terminal starts photographing, and the terminal stores a photographed image or film. An embodiment of this application provides a display control method, applied to a terminal including a display screen and a front-facing camera, so that a countdown prompt message displayed on the display screen of the terminal can guide a line of sight of the user to the front-facing camera or close to a direction of the front-facing camera. As shown in FIG. 4, the method may include the following steps.

S101: The terminal starts the front-facing camera of the terminal, and a preview screen is displayed on the display screen of the terminal.

Content on the preview screen is an image collected by the camera. Specifically, the front-facing camera may be started by using an application program. The application program may be an application program that may collect the image by using the camera, such as Camera or WeChat.

S102: In response to a time-lapse photographing command, the terminal sequentially displays at least two countdown numbers at a position that is preset on the display screen and that is close to the front-facing camera.

The countdown number may include an Arabic number, an English number (one or two), a Chinese number (one or two), and another word or character that indicates a number. This is not limited in this application.

The countdown number may be specifically displayed by overlapping the preview screen, or only the countdown number instead of the preview screen may be displayed. Overlapping display may be implemented through direct overlapping. To be specific, the countdown number is displayed on an upper layer of the preview screen. Alternatively, the overlapping display may be implemented after the preview screen is processed. For example, the preview screen is zoomed out, or some or all of the preview screen is grayed out.

Each countdown number is sequentially displayed from a start position to an end position. The start position is close to the front-facing camera, and the end position, relative to the start position, is far away from the front-facing camera. To prevent a line of sight of a photographed object from being far away from the camera, a distance between the end position of the countdown number and the front-facing camera does not exceed a preset threshold.

Specifically, after starting the application program that can collect the image by using the front-facing camera, the user selects the time-lapse photographing function on a setting screen and sets countdown duration, and then returns to a screen of the application program in which the camera is used for collection. In this case, the user taps a photographing button. The terminal starts to perform the time-lapse photographing function, and dynamically displays the countdown number at the position that is on the display screen and that is close to the front-facing camera.

The terminal may simultaneously display a graph in the front of the image based on the countdown number. The graph moves along with the countdown number, and the countdown number is displayed in the graph. For example, for 10-second time-lapse photographing, 10, 9, ..., and 1 may be sequentially displayed in the graph. The countdown duration may be set by the user, for example, 3 seconds, and displayed countdown numbers are 3, 2, and 1. In this embodiment of the present invention, 10 is used as an example for description, or another number may be used. Details are not described herein again. It should be noted that in this application, that the countdown number is displayed in the graph is used as an example for description. This is not intended to limit that this solution must be used.

The graph and the countdown number may move downward from an upper frame of the display screen. A shape and/or transparency of the graph and a shape and/or transparency of the number may change with a moving distance. When a first preset condition is not met, an upper part of the graph deforms toward the upper frame of the terminal to connect to the upper frame. This may form an adhesion effect between the graph and the upper frame before the graph falls. The terminal may determine an up-down direction based on a sensor such as a gyroscope, a gravity sensor, or an acceleration sensor, to determine a direction in which the countdown number moves downward. When the first preset condition is met, the entire graph is displayed. That the first preset condition is not met in this application may include: The countdown number is less than a first time threshold, or the moving distance of the graph is less than a first distance threshold, or a distance between an upper edge or a lower edge of the graph and the upper frame is less than a second distance threshold, or the like. This is not limited in this application.

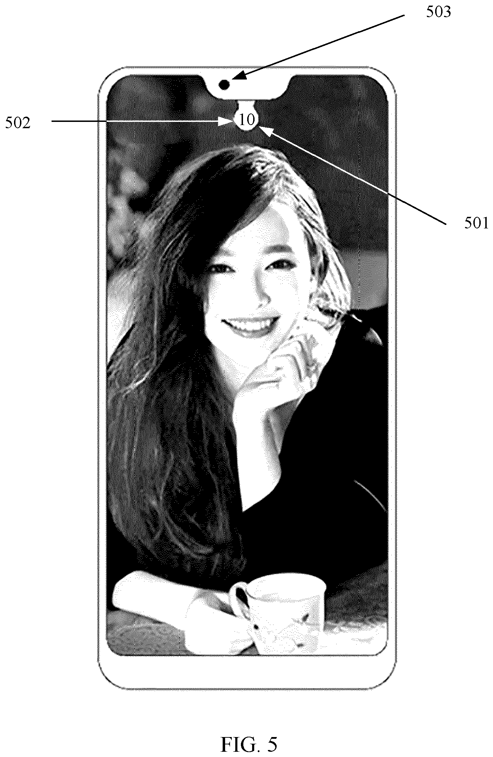

The graph may be a vector graph, a picture, or the like. The graph may be a vector graph in a water droplet shape shown in FIG. 5, or may be a vector graph in another shape (for example, a star, a polygon, a diamond, or a rectangle). This is not limited in this application. It should be noted that in this application, the vector graph in a water droplet shape is used as an example for description. This is not intended to limit that this solution must be used.

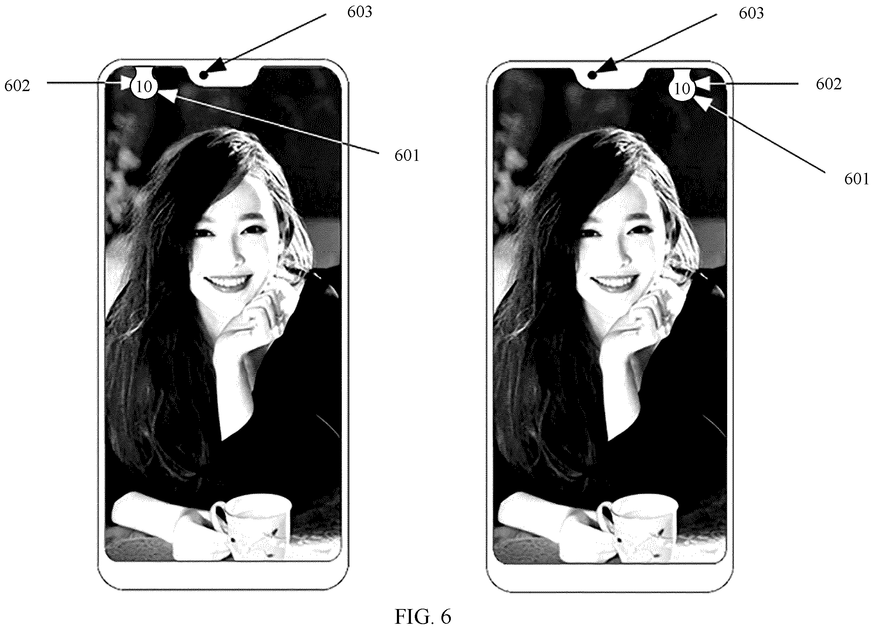

Because the camera is usually disposed in an upper area of the terminal, the start position for displaying the graph and the countdown number may be located on the upper frame and close to the front-facing camera, to guide the line of sight of the user to the direction of the camera. Particularly, for a terminal device having a full screen with a notch, a camera is usually disposed in a notch area. Therefore, with comprehensive consideration of aesthetic perception, as shown in FIG. 5, a start position from which a graph 501 and a countdown number 502 start to be displayed may be located on an upper frame corresponding to the notch area. It may be understood that, the start position from which the graph and the countdown number start to be displayed may not necessarily align with a center of a camera 503 strictly, provided that positions are roughly close. As shown in FIG. 6, a start position from which a graph 601 and a countdown number 602 start to be displayed may be located on a left side or a right side of a camera 603. In addition, to prevent the line of sight of the user from being guided away from the camera, the end position at which the graph and the countdown number stop being displayed may be located in an upper half part of the display screen of the terminal.

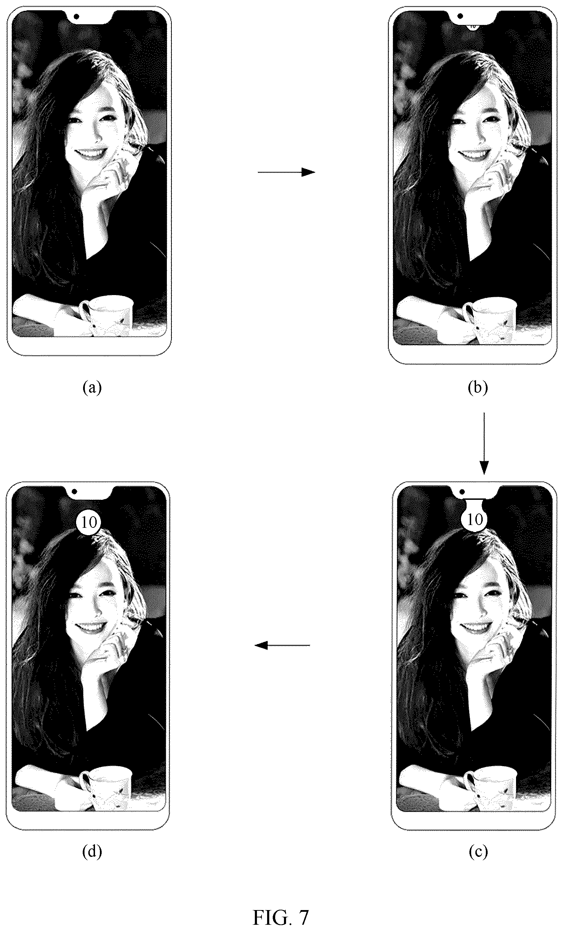

FIG. 7 shows a process in which a graph and a countdown number move downward from an upper frame of a display screen, (a) to (c) in FIG. 7 are examples in which a first preset condition is not met, and (d) in FIG. 7 is an example in which the first preset condition is met. In the process in which the graph and the countdown number move downward, as a moving distance continuously increases, transparency of the graph and that of the countdown number may also change continuously with the moving distance (not shown in the figure, for example, the transparency is reduced from 100% to 0%). This implements that the graph and the countdown number are generated, move downward, and are faded away.

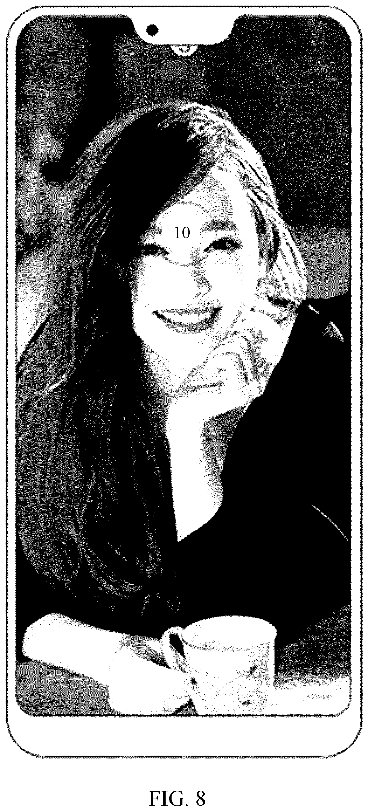

It should be noted that only a change process of the graph about one second during countdown is shown in the figure. It may be understood that during the countdown, a moving process and a change process of the graph and those of the countdown number may be displayed once per second. In addition, a moving process and a change process of each graph and those of each countdown number may last less than or greater than one second. Therefore, when a graph and a countdown number of a previous second are dim and do not completely disappear, a graph and a countdown number of a next second are generated and displayed. Referring to FIG. 8, before a graph and a countdown number of the tenth second completely disappear, a graph and a countdown number of the ninth second are generated and displayed. In addition, a change ratio of the graph and that of the countdown number may be different.

The following uses the graph in a water droplet shape as an example, to describe in detail implementation of the technical solution of this step. It should be understood that the technical solutions in a process of graphic drawing and a moving process are only given as examples. This is not intended to limit that the technical solutions must be used.

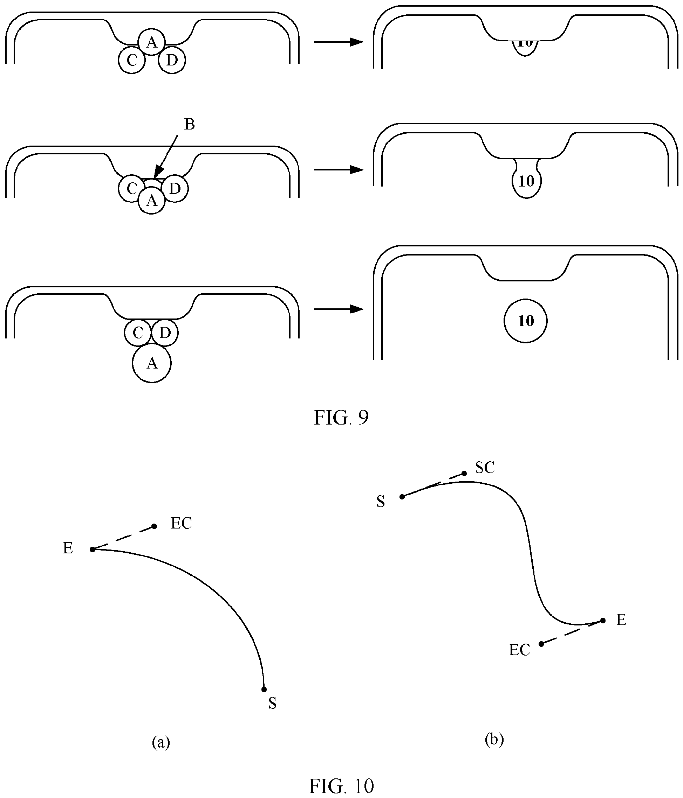

First, how to draw the graph when the first preset condition is not met is described. As shown in FIG. 9, four circles A, B, C, and D may be generated on the terminal at the start position of the graph. The circle A is a main part of the graph in a water droplet shape, and the circle B is an upper part that is of the graph in a water droplet shape and that is deformed toward the upper frame to connect to the upper frame. In an initial state, the circle A overlaps the circle B. The circle C and the circle D are located on two sides of the circle A and the circle B respectively but are not displayed. Specifically, the circle A and the circle B move downward at the same time. When the circle A or the circle B is tangent to an upper line of a screen of the terminal, the circle B stops moving downward, and the circle A continues to move downward. When the circle A is separated from the circle B, the circle C and the circle D move toward the middle. In a moving process, a closed graph formed by cutting the circle A, the circle B and the upper line by the circle C and the circle D is the graph in a water droplet shape. It should be noted that this example is only one implementation for forming the graph in a water droplet shape, and the graph in a water droplet shape may be drawn in another manner, for example, a Bezier curve. This is not limited in this application.

It should be noted that the Bezier curve is a basic tool to construct computer graphics and image, and is one of basic lines prevailing in graphic construction. Referring to (a) in FIG. 10, a second-order Bezier curve is controlled by a control point. According to the second-order Bezier curve, a graph is generated and edited by controlling three points on the curve: a start point S, an end point E, and an end control point EC. Curvature of the curve at the end point may be controlled by moving the end control point. It should be understood that the control point may also be used to control curvature of the curve at the start point. This is not limited in this application. Referring to (b) in FIG. 10, a third-order Bezier curve is controlled by two control points. According to the third-order Bezier curve, the graph is generated and edited by controlling four points on the curve: a start point S, an end point E, a start control point SC, and an end control point EC. Curvature of the curve at the start point may be controlled by moving the start control point, and curvature of the curve at the end point may be controlled by moving the end control point.

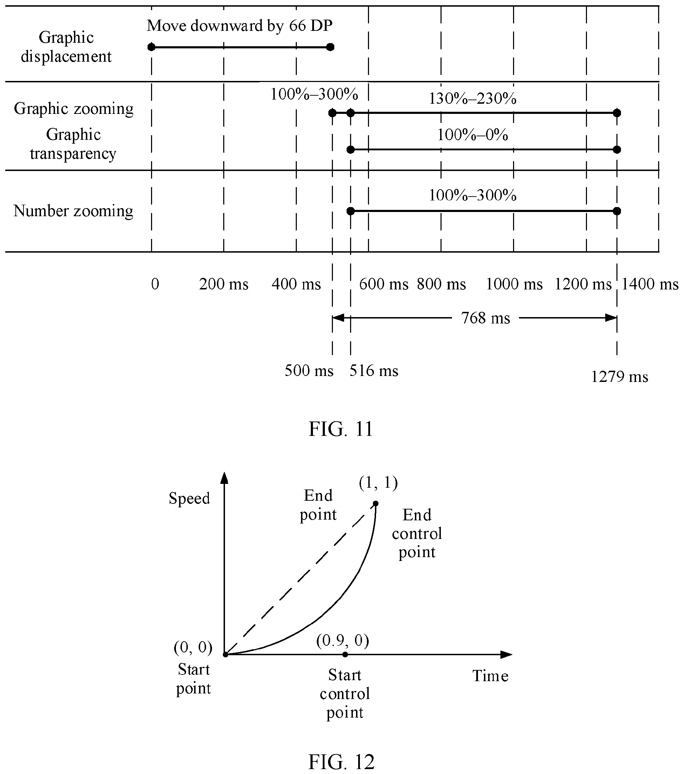

Then a complete time sequence according to which the graph and a countdown number are generated, move downward, and are finally faded away is described. For example, referring to FIG. 11, 0 ms to 500 ms corresponds to a process in which the graph and the countdown number are generated and then completely displayed. During this period, the graph and the countdown number move downward by 66 device independent pixels (device independent pixels, DP). 500 ms to 516 ms corresponds to a process in which the graph and the countdown number are completely displayed and then start to be separated from the upper frame. During this period, a shape of the graph is zoomed in from 100% to 130%. 516 ms to 1279 ms corresponds to a process in which the graph and the countdown number are separated from the upper frame, then fall, and then are dim and finally disappear. During this period, the shape of the graph is zoomed in from 130% to 230%, transparency of the graph is reduced from 100% to 0%, and the countdown number in the graph is zoomed in from 100% to 300%. It can be learned from the foregoing that the complete time sequence exceeds one second. Therefore, when a graph and a countdown number of a previous second are dim and do not completely disappear, a graph and a countdown number of a next second are generated and displayed.

In a "graphic displacement" part in FIG. 11, a change of a moving speed of the graph and the countdown number may be simulated by using an acceleration curve of a falling object. FIG. 12 shows an acceleration curve simulated by using the third-order Bezier curve. A speed at which the graph moves downward may increase with time according to the acceleration curve. A start point of the Bezier curve is (0, 0), an end point is (1, 1), a start control point is (0.9, 0), and an end control point is (1, 1). It may be understood that another acceleration curve may be used to simulate a process in which the graph and the countdown number move downward. This is not limited in this application.

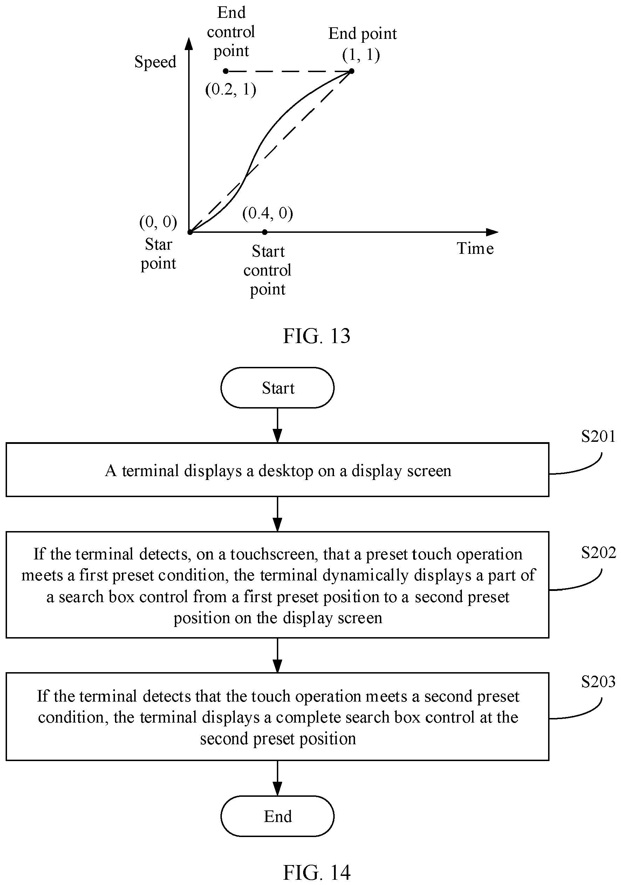

In a "graphic zooming" part, a "graphic transparency" part, and a "number zooming" part in FIG. 10, a process of graphic zooming, a process of a transparency change, and a process of number zooming may also be simulated by using a deformation curve. FIG. 13 shows a deformation curve simulated by using the third-order Bezier curve. A start point of the Bezier curve is (0, 0), an end point is (1, 1), a start control point is (0.4, 0), and an end control point is (0.2, 1). It may be understood that another deformation curve may be used to simulate the foregoing process. This is not limited in this application.

S103: The terminal automatically starts a shutter when a countdown ends, and displays, on the display screen, a photographed image when the shutter is started this time.

The graph and the countdown number may stop being displayed at the end of the last second, and the shutter is started to perform photographing.

According to the display control method provided in this embodiment of this application, the countdown number moves from the position close to the front-facing camera to a position far away from the front-facing camera, to guide the line of sight of the user to the front-facing camera or close to the direction of the front-facing camera.

It may be understood that the display control method provided in this embodiment of this application may be applied to a time-lapse photographing scenario, and may also be applied to another scenario in which a preset command is executed after a graph stops being displayed. Following description refers to examples useful for understanding the invention but not being part of it.

Currently, when a global search is performed on a mobile phone, the phone needs to jump between screens for a plurality of times, and a quick search cannot be implemented when an operation is performed on a search screen. This is inconvenient for a user. This application provides a display control method, applied to a terminal including a display screen and a touchscreen. The display screen may be integrated with the touchscreen. A user slides down a search box on a desktop to quickly display the search box, and the search box is displayed in a dynamic change form of a water droplet shape. The search box may be better combined with a notch area when a full screen with a notch is combined. This can fully use display space to improve display efficiency. As shown in FIG. 14, the method may include the following steps.

S201: The terminal displays the desktop on the display screen.

The desktop is also referred to as a home screen (home screen), and is a screen on which an icon, a control, and a wallpaper are displayed after an application program is exited.

S202: If the terminal detects, on the touchscreen, that a preset touch operation meets a first preset condition, the terminal dynamically displays a part of a search box control from a first preset position to a second preset position on the display screen.

The preset touch operation includes continuously touching the touchscreen. The first preset condition is that the touch operation continuously moves in a preset direction at a speed less than a speed threshold. In other words, a finger of the user, a stylus, or the like continuously contacts and moves on the touchscreen in the preset direction. The preset direction includes a downward direction or an obliquely downward direction. Continuously moving downward or obliquely downward at the speed less than the speed threshold may be considered as slowly sliding down, and continuously moving downward or obliquely downward at a speed greater than the speed threshold may be considered as quickly sliding down.

A shape and/or transparency of the part of the search box control may change with a moving distance of the touch operation. The control refers to a graphic user interface object, and a preset function may be activated or a corresponding application may be started by operating the control. The search box control may start a search function and display a search result after receiving an entered character.

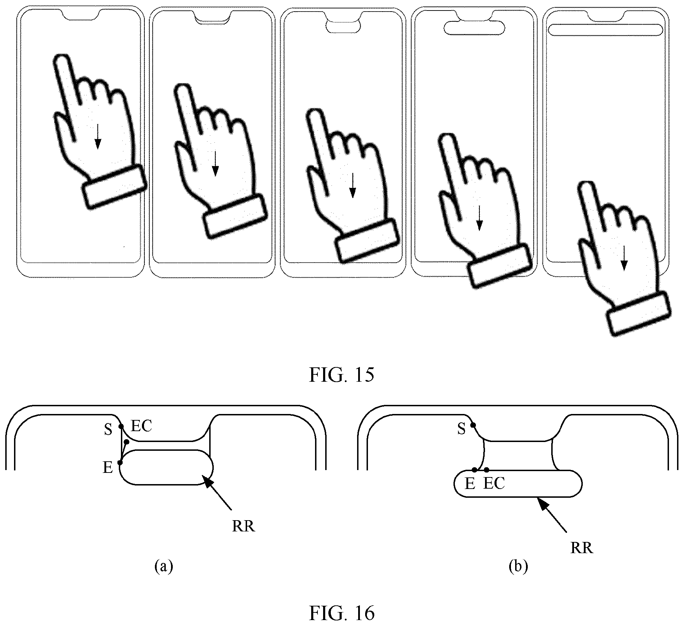

It should be noted that a moving distance of the search box control does not need to be equal to a moving distance of a touch point in a vertical direction, and may be in a specific proportion or meet a specific functional relationship. Therefore, the search box control can be dynamically displayed based on moving of the touch operation. This is not limited in this application. FIG. 15 is a schematic diagram in which the search box control moves along with a moving direction of the touch point.

Referring to FIG. 15, the first preset position at which the search box control starts to be displayed may be located at a central position of an upper frame. For the full screen with a notch, the first preset position at which the search box control starts to be displayed may be in the notch area of the upper frame. The first preset position is different from the second preset position, and the second preset position may be located below the first preset position and has a specific distance from the first preset position.

A start position of the touch operation is not necessarily the first preset position, and may be another position at which the touch operation can move in the preset direction on the display screen.

Referring to FIG. 15, a shape and/or transparency of the search box control may change with the moving distance of the search box control. In addition, when the first preset condition is not met, an upper part of the search box control deforms toward the upper frame of the display screen to connect to the upper frame. This may form an adhesion effect between the search box control and the upper frame when the search box control moves downward. For the full screen with a notch, the upper part of the search box control deforms toward the notch area to connect to the notch area.

In the following, how to draw the search box control when the first preset condition is not met is used as an example for description. This is not intended to limit that the described technical solution must be used. Specifically, a rounded rectangle may be deformed, and a second-order or third-order Bezier curve is provided as an auxiliary curve for implementation. The second-order Bezier curve is used as an example. Referring to FIG. 16, the rounded rectangle is bilaterally symmetrical relative to a central line of the screen, and two Bezier curves are also bilaterally symmetrical relative to the central line of the screen. A closed graph formed by the Bezier curves on two sides and the rounded rectangle is used as a graph of the search box control. One of the Bezier curves is used as an example. A start point S of the Bezier curve is located on an edge of the notch area of the upper frame, and an end point E is located on the rounded rectangle. A width of the rounded rectangle changes with a downward moving distance of the search box control. Referring to (a) in FIG. 16, when a difference between the width of the rounded rectangle and a width of the notch area is less than twice a radius of a chamfer of the rounded rectangle, the end point E of the Bezier curve is located on an arc line of the rounded rectangle RR, and an end control point EC is located on a tangent line of the arc line of the rounded rectangle RR. Referring to (b) in FIG. 16, when the difference between the width of the rounded rectangle and the width of the notch area is greater than or equal to twice the radius of the chamfer of the rounded rectangle, the end point E and the end control point EC of the Bezier curve are located on an upper line of the rounded rectangle RR

S203: If the terminal detects that the touch operation meets a second preset condition, the terminal displays a complete search box control at the second preset position.

The second preset condition is that a moving distance of the touch operation in the preset direction meets a preset threshold, or the second preset condition is that the touch operation reaches a preset position or falls within a preset position range.

When the touch operation meets the second preset condition, if the touch operation continues to move in the preset direction, the search box control does not change any more.

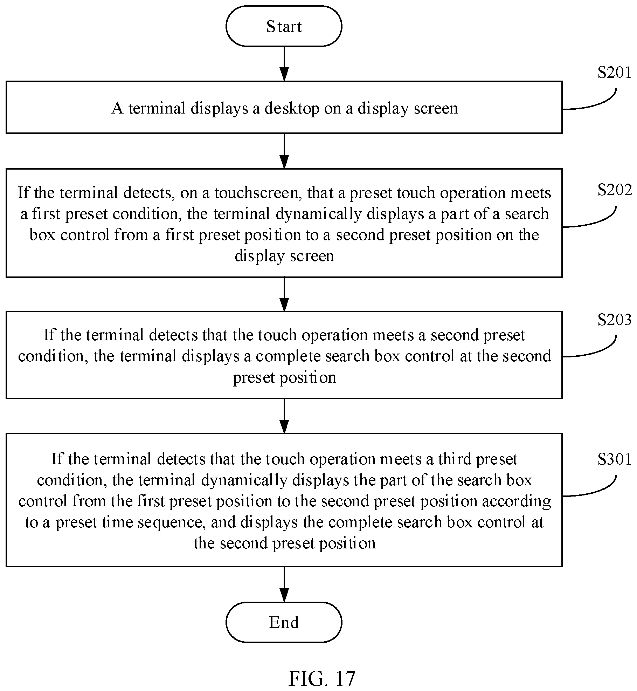

Referring to FIG. 17, the method may further include the following step.

S301: If the terminal detects that the touch operation meets a third preset condition, the terminal dynamically displays the part of the search box control from the first preset position to the second preset position according to a preset time sequence, and displays the complete search box control at the second preset position.

The third preset condition is that the touch operation continuously moves in the preset direction at the speed greater than the speed threshold.

To be specific, if the user quickly slides the screen down, the terminal implements an entire process from generation of the search box control to complete display of the search box control according to the preset time sequence.

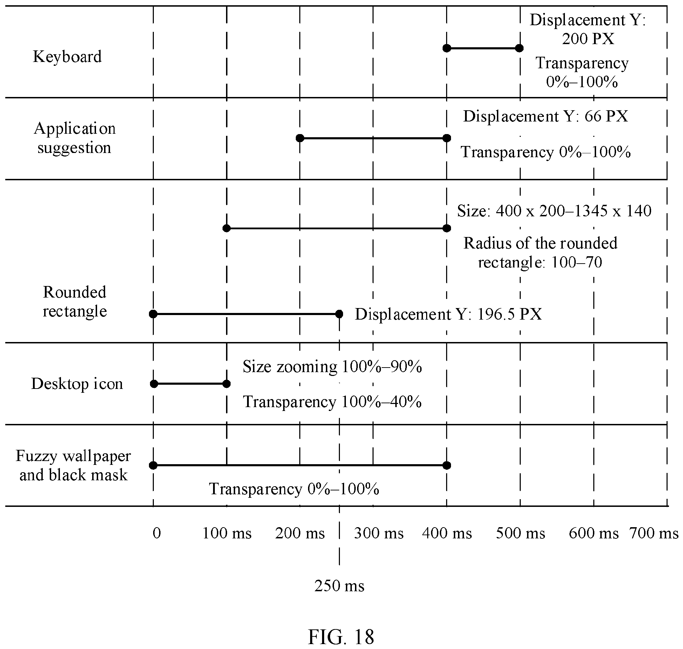

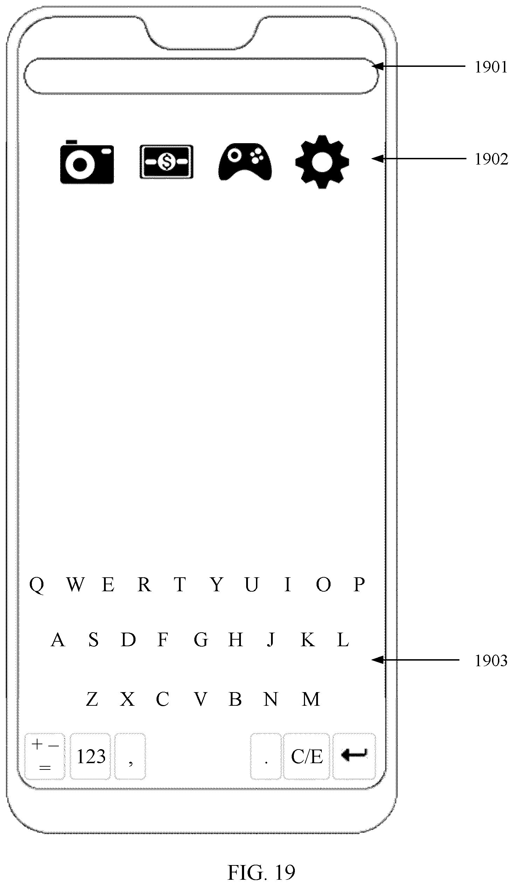

In the following, a complete preset time sequence according to which generation and downward moving of the search box control are implemented during quick sliding down is described. For example, referring to FIG. 18, 0 ms to 400 ms corresponds to a process in which the search box control is generated, then moves downward to a preset position, and finally is zoomed in to a standard size. The process may be combined with a fuzzy wallpaper and a black mask. During 0 ms to 100 ms, a desktop icon may be zoomed out from 100% to 90%, and transparency may be reduced from 100% to 40%. 0 ms to 250 ms corresponds to a process in which the rounded rectangle of the search box control starts to be generated and then moves downward to the preset position. During this period, the rounded rectangle moves downward by 196.5 pixels (pixel, PX). 100 ms to 400 ms corresponds to a size change process of the rounded rectangle of the search box control. During this period, the rounded rectangle is zoomed in from 400 x 200 to 1345 x 140, and a radius of a rounded corner is reduced from 100 to 70. 200 ms to 400 ms corresponds to a process of collaboratively displaying "application suggestion". During this period, the "application suggestion" moves downward by 66 PX, and transparency is increased from 0% to 100%. 400 ms to 500 ms corresponds to a process of collaboratively displaying a keyboard. During this period, the keyboard moves downward by 200 PX, and transparency is increased from 0% to 100%. A search box 1901, an application suggestion 1902, and a keyboard 1903 that are finally displayed on the terminal are shown in FIG. 19.

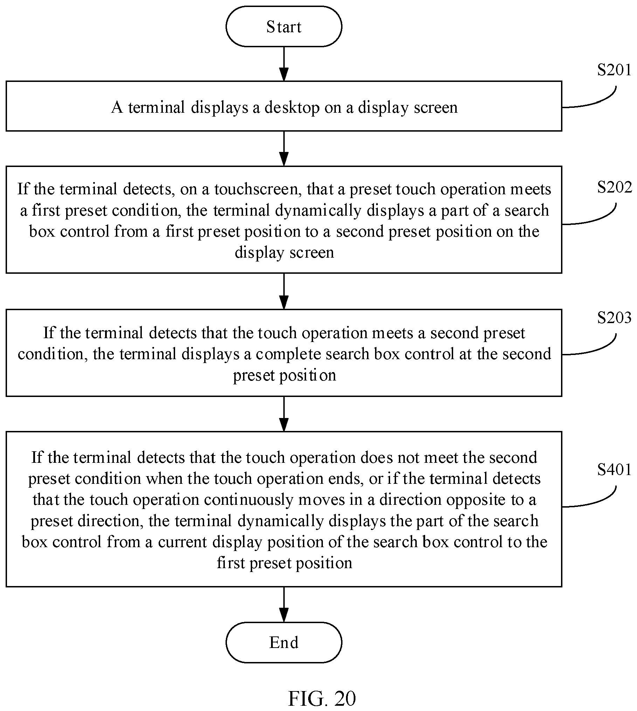

Referring to FIG. 20, the method may further include the following step.

S401: If the terminal detects that the touch operation does not meet the second preset condition when the touch operation ends, or if the terminal detects that the touch operation continuously moves in a direction opposite to the preset direction, the terminal dynamically displays the part of the search box control from a current display position of the search box control to the first preset position.

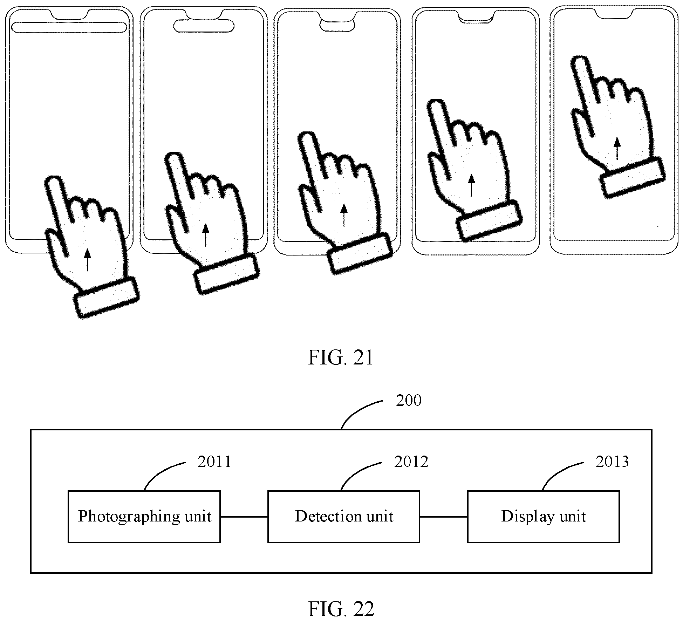

In other words, if the second preset condition is not met when the user stops touching, or referring to FIG. 21, if the touch operation of the user moves in the direction opposite to the preset direction, the terminal displays the search box control according to a reverse process relative to a process from step S202 to step S203 until the search box control is hidden, or until the touch operation of the user stops moving.

According to the display control method provided in this embodiment of this application, when the desktop is displayed, the terminal detects the touch operation that is of the user and that continuously moves in the preset direction, to display a dynamically changing search box. When the touch operation meets a preset condition, a complete search box is displayed. The search box can be quickly displayed through a moving touch operation of the user.

It may be understood that the display control method provided in this embodiment of this application may be applied to a scenario in which the search box is displayed, and may also be applied to another scenario in which an application is switched through graphic transformation.

It may be understood that, to implement the foregoing functions, the terminal and the like include a corresponding hardware structure and/or a corresponding software module for performing the functions. A person skilled in the art should easily be aware that, in combination with the example units, algorithms, and steps described in the embodiments disclosed in this specification, the embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the terminal and the like may be divided into function modules based on the foregoing method examples. For example, function modules corresponding to various functions are obtained through division, or two or more functions may be integrated into one processing module. The integrated module may be implemented in a form of hardware, or may be implemented in a form of a software function module. It should be noted that, in the embodiments of this application, division into the modules is used as an example, and is merely logical function division. In an actual implementation, another division manner may be used.

For division into the function modules corresponding to the functions, FIG. 22 shows a possible schematic structural diagram of the terminal in the foregoing embodiments. The terminal 200 includes a photographing unit 2011, a detection unit 2012, and a display unit 2013.

The photographing unit 2011 is configured to support the terminal 200 to perform the process S101 in FIG. 4. The detection unit 2012 is configured to support the terminal 200 to perform the processes S202 and S203 in FIG. 14, the processes S202, S203, and S301 in FIG. 17, and the processes S202, S203, and S401 in FIG. 17. The display unit 2011 is configured to support the terminal 200 to perform the processes S101 to S103 in FIG. 4, the processes S201 to S203 in FIG. 14, the processes S201 to S203 and S301 in FIG. 17, and the processes S201 to S203 and S401 in FIG. 20. All related content of the steps in the method embodiments may be cited in function descriptions of the corresponding function modules. Details are not described herein again.

When an integrated unit is used, the photographing unit 2011, the detection unit 2012, and the display unit 2013 may be integrated into a processing module 2021. Certainly, the terminal may further include a storage module, a communications module, an input/output module, and the like.

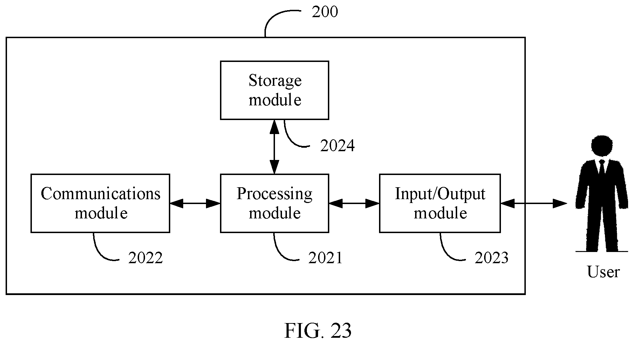

In this case, FIG. 23 is a possible schematic structural diagram of the terminal in the foregoing embodiments. The processing module 2021 is configured to control and manage an action of the terminal. A communications module 2022 is configured to support communication between the terminal and another network entity such as a cloud server or another terminal. An input/output module 2023 is configured to receive information entered by a user, or output information provided for the user and various menus of the terminal. A storage module 2024 is configured to store program code and data of the terminal. A photographing module 2025 is configured to photograph a video image. A detection module 2026 is configured to detect a shake of the terminal.

For example, the processing module 2021 may be the processor shown in FIG. 3 or a controller, for example, a central processing unit (central processing unit, CPU), a graphics processing unit (graphics processing unit, GPU), a general purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or a combination thereof. The processing module may implement or execute various example logical blocks, modules, and circuits described with reference to content disclosed in this application. The processor may be a combination of processors implementing a calculation function, for example, a combination of one or more microprocessors, or a combination of the DSP and a microprocessor.

The communications module 2022 may be the RF circuit shown in FIG. 3, an input/output device, a communications interface, or the like. For example, the communications module 2022 may be specifically a Bluetooth module, a Wi-Fi module, a peripheral interface, or the like.

The storage module 2024 may be the memory shown in FIG. 3. The memory may include a high-speed random access memory (RAM), or may include a nonvolatile memory such as a magnetic disk storage device, a flash memory device, or another volatile solid-state storage device.

The input/output module 2023 may be an input/output device such as the touchscreen and the display screen shown in FIG. 3, a keyboard, a microphone, a display, or the like. The display may be specifically configured in a form such as a liquid crystal display or an organic light emitting diode. In addition, a touchpad may be further integrated into the display, and is configured to collect a touch event on or near the touchpad, and send collected touch information to another component (for example, a processor).

When the storage module is the memory, the input/output module is the display, the processing module is the processor, and the communications module is the communications interface, the memory is configured to store a computer-executable instruction, and the processor is coupled to the memory. When the terminal runs, the processor executes the computer-executable instruction stored in the memory, so that the terminal performs the method according to any one of FIG. 4, FIG. 14, FIG. 17, and FIG. 20.

An embodiment of the present invention further provides a computer storage medium that stores one or more programs. The one or more programs include an instruction, and when the instruction is executed by a terminal, the terminal performs the method according to any one of FIG. 4, FIG. 14, FIG. 17, and FIG. 20.

An embodiment of the present invention further provides a computer program product including an instruction. When the computer program product runs on a terminal, the terminal is enabled to perform the method according to any one of FIG. 4, FIG. 14, FIG. 17, and FIG. 20.

The terminal, the computer storage medium, or the computer program product provided in the embodiments of the present invention are all configured to perform the corresponding method provided above. Therefore, for beneficial effects that can be achieved thereof, refer to the beneficial effects in the corresponding method provided above. Details are not described herein again.

It should be understood that sequence numbers of the foregoing processes do not mean execution sequences in various embodiments of this application. The execution sequences of the processes should be determined based on functions and internal logic of the processes, and should not constitute any limitation on the implementation processes of the embodiments of this application.

A person of ordinary skill in the art may be aware that, in combination with the example units, algorithms, and steps described in the embodiments disclosed in this specification, the embodiments may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiment. Details are not described herein again.

In a plurality of embodiments provided in this application, it should be understood that the disclosed system, device, and method may be implemented in another manner. For example, the described device embodiment is merely an example. For example, division into the units is merely logical function division and may be other division in an actual implementation. For example, a plurality of units or components may be combined or integrated into another system, or some features may be ignored or not performed. In addition, the displayed or discussed mutual coupling or a direct coupling or a communication connection may be implemented by using some interfaces. An indirect coupling or a communication connection between the devices or units may be implemented in an electronic form, a mechanical form, or in another form.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units are integrated into one unit.

All or some of the embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center wiredly (for example, a coaxial cable, an optical fiber, or a digital subscriber line (Digital Subscriber Line, DSL)) or wirelessly (for example, infrared, radio, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

The foregoing descriptions are merely specific implementations of this application, but are not intended to limit a protection scope of this application.

Therefore, the protection scope of this application shall be subject to the protection scope of the claims.

## Claims

1. A display control method, applied to a terminal comprising a display screen and a front-facing camera, wherein the method comprises:
starting, by the terminal, the front-facing camera, and displaying a preview screen on the display screen, wherein content on the preview screen is an image collected by the camera;
in response to a time-lapse photographing command, sequentially displaying, by the terminal, at least two countdown numbers at a position that is preset on the display screen and that is close to the front-facing camera, wherein each countdown number is sequentially displayed from a start position to an end position, the start position is close to the front-facing camera, and the end position, relative to the start position, is far away from the front-facing camera; and
automatically starting, by the terminal, a shutter when a countdown ends, and displaying, on the display screen, a photographed image when the shutter is started this time.

2. The method according to claim 1, wherein the method further comprises:
displaying, by the terminal, a graph that moves along with the countdown number, wherein the countdown number is displayed in the graph.

3. The method according to claim 2, wherein when a first preset condition is not met, an upper part of the graph deforms toward an upper frame of the terminal to connect to the upper frame.

4. The method according to claim 3, wherein that the first preset condition is not met comprises: the countdown number is less than a first time threshold, or a moving distance of the graph is less than a first distance threshold, or a distance between an upper edge or a lower edge of the graph and the upper frame is less than a second distance threshold.

5. The method according to any one of claims 2 to 4, wherein the graph is a vector graph in a water droplet shape.

6. A terminal, wherein the terminal comprises a display screen and a front-facing camera, and the terminal further comprises:
a photographing unit, configured to start the front-facing camera; and
a display unit, configured to display a preview screen on the display screen, wherein content on the preview screen is an image collected by the camera, wherein
the display unit is further configured to: in response to a time-lapse photographing command, sequentially display at least two countdown numbers at a position that is preset on the display screen and that is close to the front-facing camera, wherein each countdown number is sequentially displayed from a start position to an end position, the start position is close to the front-facing camera, and the end position, relative to the start position, is far away from the front-facing camera;
the photographing unit is further configured to automatically start a shutter when a countdown ends; and
the display unit is further configured to display, on the display screen, a photographed image when the shutter is started this time.

7. The terminal according to claim 6, wherein
the display unit is further configured to display a graph that moves along with the countdown number, wherein the countdown number is displayed in the graph.

8. The terminal according to claim 6, wherein when a first preset condition is not met, an upper part of the graph deforms toward an upper frame of the terminal to connect to the upper frame.

9. The terminal according to claim 8, wherein that the first preset condition is not met comprises: the countdown number is less than a first time threshold, or a moving distance of the graph is less than a first distance threshold, or a distance between an upper edge or a lower edge of the graph and the upper frame is less than a second distance threshold.

10. The terminal according to claim 8 or 9, wherein the graph is a vector graph in a water droplet shape.

11. A terminal, comprising a processor, a display, a memory, and a communications interface, wherein
the memory is configured to store a computer-executable instruction, the processor is coupled to the memory, and when the terminal runs, the processor executes the computer-executable instruction stored in the memory, so that the terminal performs the method according to any one of claims 1 to 5.

12. A computer-readable storage medium, wherein the computer-readable storage medium stores an instruction, and when the instruction is run on a terminal, the terminal is enabled to perform the method according to any one of claims 1 to 5.

## Patentansprüche

1. Anzeigesteuerungsverfahren, das auf ein Endgerät angewendet wird, das einen Anzeigebildschirm und eine Frontkamera umfasst, wobei das Verfahren Folgendes umfasst:
Starten, durch das Endgerät, der Frontkamera und Anzeigen eines Vorschaubildschirms auf dem Anzeigebildschirm, wobei ein Inhalt auf dem Vorschaubildschirm ein Bild ist, das durch die Kamera aufgenommen wird;
als Reaktion auf einen Zeitrafferfotografierbefehl, fortlaufendes Anzeigen, durch das Endgerät, von wenigstens zwei Countdown-Zahlen an einer Position, die auf dem Anzeigebildschirm voreingestellt ist und die nahe der Frontkamera liegt, wobei jede Countdown-Zahl von einer Startposition zu einer Endposition fortlaufend angezeigt wird, wobei die Startposition nahe der Frontkamera liegt und die Endposition, relativ zu der Startposition, weit von der Frontkamera entfernt ist; und
automatisches Starten, durch das Endgerät, eines Verschlusses, wenn ein Countdown endet, und Anzeigen, auf dem Anzeigebildschirm, eines fotografierten Bildes, wenn der Verschluss diesmal gestartet wird.

2. Verfahren nach Anspruch 1, wobei das Verfahren ferner Folgendes umfasst:
Anzeigen, durch das Endgerät, eines Graphen, der sich zusammen mit der Countdown-Zahl bewegt,
wobei die Countdown-Zahl in dem Graphen angezeigt wird.

3. Verfahren nach Anspruch 2, wobei, wenn eine erste voreingestellte Bedingung nicht erfüllt ist, sich ein oberer Teil des Graphen in Richtung eines oberen Rahmens des Endgeräts verformt, um sich mit dem oberen Rahmen zu verbinden.

4. Verfahren nach Anspruch 3, wobei, dass die erste voreingestellte Bedingung nicht erfüllt ist, Folgendes umfasst: die Countdown-Zahl ist kleiner als eine erste Zeitschwelle oder ein Bewegungsabstand des Graphen ist kleiner als eine erste Abstandsschwelle oder ein Abstand zwischen einer oberen Kante oder einer unteren Kante des Graphen und dem oberen Rahmen ist kleiner als eine zweite Abstandsschwelle.

5. Verfahren nach einem der Ansprüche 2 bis 4, wobei der Graph ein Vektorgraph in einer Wassertröpfchenform ist.

6. Endgerät, wobei das Endgerät einen Anzeigebildschirm und eine Frontkamera umfasst und das Endgerät ferner Folgendes umfasst:
eine Fotografiereinheit, die konfiguriert ist, um die Frontkamera zu starten; und
eine Anzeigeeinheit, die konfiguriert ist, um einen Vorschaubildschirm auf dem Anzeigebildschirm anzuzeigen, wobei der Inhalt auf dem Vorschaubildschirm ein Bild ist, das durch die Kamera aufgenommen wird, wobei
die Anzeigeeinheit ferner für Folgendes konfiguriert ist: als Reaktion auf einen Zeitrafferfotografierbefehl, fortlaufendes Anzeigen von wenigstens zwei Countdown-Zahlen an einer Position, die auf dem Anzeigebildschirm voreingestellt ist und die nahe der Frontkamera liegt, wobei jede Countdown-Zahl von einer Startposition zu einer Endposition fortlaufend angezeigt wird, die Startposition nahe der Frontkamera liegt und die Endposition, relativ zu der Startposition, weit von der Frontkamera entfernt ist;
die Fotografiereinheit ferner konfiguriert ist, um einen Verschluss automatisch zu starten, wenn ein Countdown endet; und
die Anzeigeeinheit ferner konfiguriert ist, um, auf dem Anzeigebildschirm, ein fotografiertes Bild anzuzeigen, wenn der Verschluss diesmal gestartet wird.

7. Endgerät nach Anspruch 6, wobei
die Anzeigeeinheit ferner konfiguriert ist, um einen Graphen anzuzeigen, der sich zusammen mit der Countdown-Zahl bewegt, wobei die Countdown-Zahl in dem Graphen angezeigt wird.

8. Endgerät nach Anspruch 6, wobei, wenn eine erste voreingestellte Bedingung nicht erfüllt ist, sich ein oberer Teil des Graphen in Richtung eines oberen Rahmens des Endgeräts verformt, um sich mit dem oberen Rahmen zu verbinden.

9. Endgerät nach Anspruch 8, wobei, dass die erste voreingestellte Bedingung nicht erfüllt ist, Folgendes umfasst: die Countdown-Zahl ist kleiner als eine erste Zeitschwelle oder ein Bewegungsabstand des Graphen ist kleiner als eine erste Abstandsschwelle oder ein Abstand zwischen einer oberen Kante oder einer unteren Kante des Graphen und dem oberen Rahmen ist kleiner als eine zweite Abstandsschwelle.

10. Endgerät nach Anspruch 8 oder 9, wobei der Graph ein Vektorgraph in einer Wassertröpfchenform ist.

11. Endgerät, das einen Prozessor, eine Anzeige, einen Speicher und eine Kommunikationsschnittstelle umfasst, wobei
der Speicher konfiguriert ist, um eine computerausführbare Anweisung zu speichern, der Prozessor mit dem Speicher gekoppelt ist, und wenn das Endgerät läuft, der Prozessor die computerausführbare Anweisung, die in dem Speicher gespeichert ist, so ausführt, dass das Endgerät das Verfahren nach einem der Ansprüche 1 bis 5 durchführt.

12. Computerlesbares Speichermedium, wobei das computerlesbare Speichermedium eine Anweisung speichert, und wenn die Anweisung auf einem Endgerät laufen gelassen wird, das Endgerät aktiviert wird, um das Verfahren nach einem der Ansprüche 1 bis 5 durchzuführen.

## Revendications

1. Procédé de commande d'affichage, appliqué à un terminal comprenant un écran d'affichage et une caméra avant, le procédé comprenant :
le démarrage, par le terminal, de la caméra frontale, et l'affichage d'un écran de prévisualisation sur l'écran d'affichage, le contenu sur l'écran de prévisualisation étant une image collectée par la caméra ;
en réponse à une commande de prise de vue en accéléré, l'affichage de manière séquentielle, par le terminal, d'au moins deux nombres de compte à rebours au niveau d'une position qui est prédéfinie sur l'écran d'affichage et qui est proche de la caméra frontale, chaque numéro de compte à rebours étant affiché de manière séquentielle d'une position de départ à une position finale, la position de départ étant proche de la caméra avant, et la position finale, par rapport à la position de départ, étant éloignée de la caméra avant ; et
le démarrage automatique, par le terminal, d'un obturateur lorsqu'un décompte se termine, et l'affichage, sur l'écran de visualisation, d'une image photographiée lorsque l'obturateur est démarré cette fois.

2. Procédé selon la revendication 1, dans lequel le procédé comprend en outre :
l'affichage, par le terminal, d'un graphique qui se déplace avec le numéro du compte à rebours,
dans lequel le nombre de compte à rebours est affiché dans le graphique.

3. Procédé selon la revendication 2, dans lequel lorsqu'une première condition prédéfinie n'est pas satisfaite, une partie supérieure du graphique se déforme vers un cadre supérieur du terminal pour se connecter au cadre supérieur.

4. Procédé selon la revendication 3, dans lequel le fait que la première condition prédéfinie n'est pas satisfaite comprend : le nombre de compte à rebours est inférieur à un premier seuil de temps, ou une distance de déplacement du graphique est inférieure à un premier seuil de distance, ou une distance entre un bord supérieur ou un bord inférieur du graphique et le cadre supérieur est inférieure à un second seuil de distance.

5. Procédé selon l'une quelconque des revendications 2 à 4, dans lequel le graphique est un graphique vectoriel en forme de gouttelettes d'eau.

6. Terminal, le terminal comprenant un écran d'affichage et une caméra avant, et le terminal comprenant en outre :
une unité de prise de vue, configurée pour démarrer la caméra orientée avant ; et
une unité d'affichage, configurée pour afficher un écran de prévisualisation sur l'écran d'affichage, le contenu sur l'écran de prévisualisation étant une image collectée par la caméra, dans lequel
l'unité d'affichage est en outre configurée pour : en réponse à une commande de prise de vue en accéléré, afficher de manière séquentielle au moins deux nombres de compte à rebours au niveau d'une position qui est prédéfinie sur l'écran d'affichage et qui est proche de la caméra avant, chaque numéro de compte à rebours étant affichée de manière séquentielle d'une position de départ à une position finale, la position de départ étant proche de la caméra avant et la position finale, par rapport à la position de départ, étant éloignée de la caméra avant ;
l'unité de prise de vue est en outre configurée pour démarrer automatiquement un obturateur lorsqu'un compte à rebours se termine ; et
l'unité d'affichage est en outre configurée pour afficher, sur l'écran d'affichage, une image photographiée lorsque l'obturateur est démarré cette fois.

7. Terminal selon la revendication 6, dans lequel
l'unité d'affichage est en outre configurée pour afficher un graphique qui se déplace avec le nombre de compte à rebours, le nombre de compte à rebours étant affiché dans le graphique.

8. Terminal selon la revendication 6, dans lequel lorsqu'une première condition prédéfinie n'est pas satisfaite, une partie supérieure du graphique se déforme vers un cadre supérieur du terminal pour se connecter au cadre supérieur.

9. Terminal selon la revendication 8, dans lequel le fait que la première condition prédéfinie n'est pas satisfaite comprend : le nombre de compte à rebours est inférieur à un premier seuil de temps, ou une distance de déplacement du graphique est inférieure à un premier seuil de distance, ou une distance entre un bord supérieur ou un bord inférieur du graphique et le cadre supérieur est inférieure à un second seuil de distance.

10. Terminal selon la revendication 8 ou 9, dans lequel le graphique est un graphique vectoriel en forme de gouttelettes d'eau.

11. Terminal, comprenant un processeur, un affichage, une mémoire, et une interface de communication, dans lequel
la mémoire est configurée pour stocker une instruction exécutable par ordinateur, le processeur est couplé à la mémoire et lorsque le terminal s'exécute, le processeur exécute l'instruction exécutable par ordinateur stockée dans la mémoire, de telle sorte que le terminal exécute le procédé selon l'un quelconque des revendications 1 à 5.

12. Support de stockage lisible par ordinateur, dans lequel le support de stockage lisible par ordinateur stocke une instruction, et lorsque l'instruction est exécutée sur un terminal, le terminal est en mesure d'effectuer le procédé selon l'une quelconque des revendications 1 à 5.
